# EUROPEAN PATENT SPECIFICATION

(11) **EP 3 057 222 B1**
(45) Date of publication and mention of the grant of the patent: **21.08.2019**
(21) Application number: 14877798.0
(22) Date of filing: 24.12.2014
(51) Int. Cl.: H02M 1/32, H02M 1/42

(54) **RECTIFYING DEVICE AND MOTOR DRIVING DEVICE**
GLEICHRICHTUNGSVORRICHTUNG UND MOTORANSTEUERUNGSVORRICHTUNG
DISPOSITIF REDRESSEUR ET DISPOSITIF D'ATTAQUE DE MOTEUR

(30) Priority: 10.01.2014 JP 2014003455
(43) Date of publication of application: 17.08.2016
(73) Proprietor: MITSUBISHI HEAVY INDUSTRIES THERMAL SYSTEMS, LTD., Tokyo 108-8215 (JP)
(72) Inventor: KAWASHIMA, Kazumasa, Tokyo 108-8215 (JP); HAYASHI, Shigeki, Tokyo 108-8215 (JP)
(74) Representative: Henkel, Breuer & Partner
(86) International application number: PCT/JP2014/084088
(87) International publication number: WO 2015/104997

(56) References cited:
- JP-A- 2001 045 763
- JP-A- 2006 254 692
- JP-A- 2006 254 692
- JP-A- 2008 219 658
- JP-A- 2009 273 241
- US-A1- 2009 141 523
- US-A1- 2012 195 073
- US-A1- 2013 033 236

## Description

### {Technical Field}

The present invention relates to a rectifying device including a power factor correction circuit and a motor driving apparatus including the rectifying device.

### {Background Art}

Conventionally, a rectifying device, which converts an alternating current (AC) input voltage supplied from a commercial AC power source into a direct current (DC) voltage, has been known. The rectifying device is generally provided with a power factor correction circuit for the purpose of power factor correction and higher harmonic suppression (see, e.g., JP2010-233439A, JP2010-84968A, JP2013-251949A, and JP2012-175767A).

As the power factor correction circuit, an active filter, including an inductor and a switching element for short-circuit path formation corresponding to the inductor, causing an input current waveform to follow a sine wave by switching of the switching element, for example, has been known.

US2012195073A1 provides a control device including a control unit, the control unit being configured to, when a first time, during which a level of a voltage output from a rectifier circuit for rectifying an alternating current supplied from an alternating-current power supply is lower than a level of a threshold voltage, has reached a threshold time, output a stop signal for stopping an operation of a power factor correction circuit to a control circuit that controls the operation of the power factor correction circuit.

US2009141523A discloses a switching control circuit for an AC/DC converter that stops the switching of a switching device in a low-phase angle range of an AC power supply to prevent an improper recovery operation after a brownout is detected.

In the power supply device according to JP2006-254692A, the input cycle of a zero-cross signal from a zero-cross detection circuit, which detects the zero-crossing point of an AC power supply, is measured; and if the input cycle goes out of prescribed value or prescribed range, a short-circuit operation is stopped. If the input cycle of the input signal of the zero-cross signal is changed, or if the input signal of the zero-cross signal is not entered for a prescribed time period, the short-circuiting operation of the short circuit is stopped. In addition, if the input of the zero-cross signal is not found in the range from the input of the zero-cross signal to a second prescribed time period, after a first prescribed time, the short-circuiting operation of the short circuit is stopped.

### {Summary of Invention}

### {Technical Problem}

An effect produced by the aforementioned power factor correction circuit is obtained on condition that a stable power source with low impedance is used. If an unstable power source with high impedance is used, the power factor correction circuit does not appropriately operate so that an unintended behavior such as generation of an abnormal noise may occur.

The present invention is directed to providing a rectifying device and a motor driving apparatus capable of quickly detecting an unstable input power supply voltage and preventing an abnormal noise or the like from being generated.

### {Solution to Problem}

According to a first aspect of the present invention, there is provided a rectifying device according to claim 1 including a power factor correction circuit including an inductor and a switching element provided to correspond to the inductor, the rectifying device including a detection means for detecting a period during which an input power supply voltage is not less than a predetermined threshold value, a determination means for determining whether a detection time detected by the detection means is within a previously set normal range, and a stopping means for stopping an operation of the power factor correction circuit when the detection time is out of the normal range.

According to the aforementioned configuration, the detection means detects the period during which the input power supply voltage is not less than the predetermined threshold value, and the determination means determines whether the detection time is within the predetermined normal range. Thus, it can be easily detected that the input power supply voltage is in an unstable state. When the determination means determines that the detection time is out of the normal range, the stopping means stops the operation of the power factor correction circuit. Thus, when the unstable power supply voltage is input, the operation of the power factor correction circuit can be quickly stopped, and an unintended behavior such as generation of an abnormal noise can be prevented from occurring.

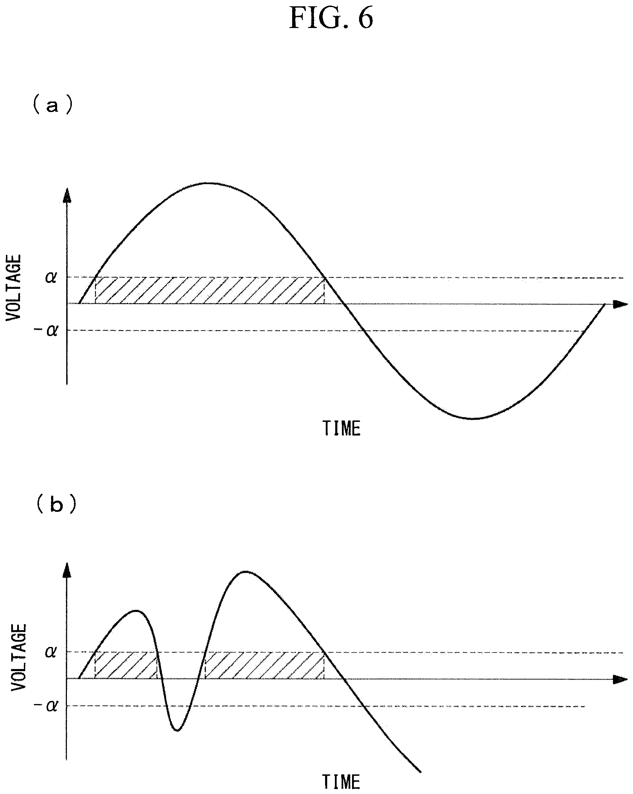

The "input power supply voltage is not less than the predetermined threshold value", described above, does not depend on whether its polarity is positive or negative. The period during which "input power supply voltage is not less than the predetermined threshold value" means both a period during which the input power supply voltage is not less than a positive threshold value (+ α) and a period during which the input power supply voltage is not more than a negative threshold value (- α), as illustrated in Fig. 6, for example. Only the period during which the input power supply voltage is not less than the positive threshold value may be detected, or only the period during which the input power supply voltage is not more than the negative threshold value may be detected. Alternatively, both the periods may be respectively detected.

In the aforementioned rectifying device, the detection means includes a photo coupler that operates when an absolute value of the input power supply voltage is not less than a predetermined value, a switching element that is rendered conductive while an output of the photo coupler is high, an input unit to which a low signal is input while the switching element is rendered conductive and to which a high signal is input while the switching element is disconnected, and a time measurement unit that measures a period during which the low signal is being continuously input in the input unit. In this case, the photo coupler and the switching element in the detection means may be used together with a zero-cross detection circuit that detects a zero-cross point.

The zero-cross detection circuit and a part of the circuit are together used, enabling miniaturization and lower-cost of the apparatus.

A second aspect of the present invention is directed to a motor driving apparatus including the aforementioned rectifying device.

In the motor driving apparatus, when the motor driving apparatus stops operating after the stopping means stops the operation of the power factor correction circuit and when an instruction to start the motor driving apparatus is input thereto, it is determined whether the detection time detected by the detection means is within the normal range, to resume the operation of the power factor correction circuit when the detection time is within the normal range. Alternatively, in the motor driving apparatus, when the stopping means stops the operation of the power factor correction circuit, the determination means may determine whether the detection time detected by the detection means is within the normal range after a predetermined period of time has elapsed since the operation was stopped, to resume the operation of the power factor correction circuit when the detection time is within the normal range.

When it can be thus confirmed that an input voltage is stable, the operation of the power factor correction circuit is resumed. Therefore, highly efficient power having few higher harmonic components can be supplied to a motor.

A third aspect of the present invention is directed to an air-conditioning apparatus including the aforementioned motor driving apparatus.

According to a fourth aspect of the present invention, there is provided a method according to claim 7 for controlling a rectifying device including a power factor correction circuit including an inductor and a switching element provided to correspond to the inductor, the method including the steps of detecting a period during which an absolute value of an input power supply voltage is not less than a predetermined threshold value, determining whether the detected detection time is within a previously set normal range, and stopping an operation of the power factor correction circuit when the detection time is out of the normal range.

### {Advantageous Effects of Invention}

The present invention produces effects of quickly detecting an unstable input power supply voltage and preventing an abnormal noise or the like from being generated.

### {Brief Description of Drawings}

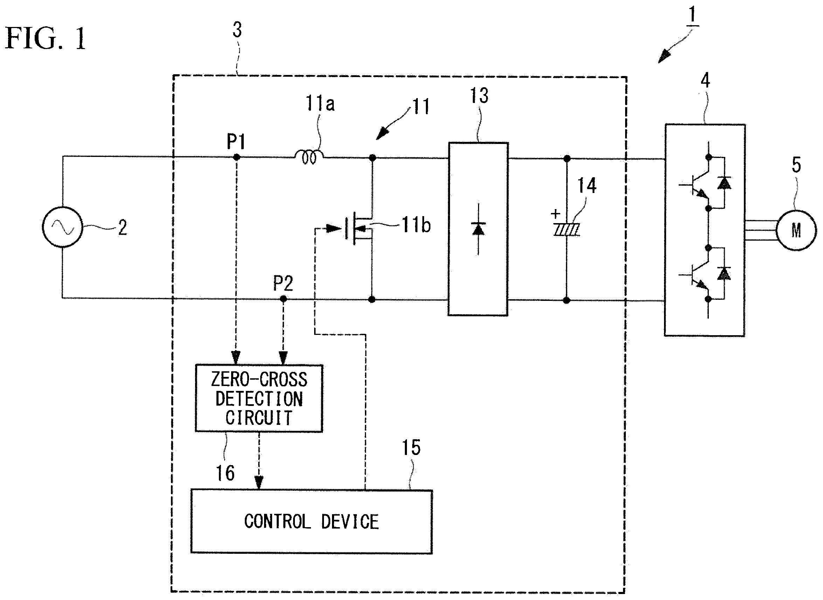

{Fig. 1}
   Fig. 1 is a diagram illustrating an example of a configuration of a motor driving apparatus according to an embodiment of the present invention.
{Fig. 2}
   Fig. 2 is a functional block diagram of a control device illustrated in Fig. 1.
{Fig. 3}
   Fig. 3 is a diagram illustrating an example of a simulation result of an input current waveform when a power factor correction circuit is not operated.
{Fig. 4}
   Fig. 4 is a diagram illustrating an example of a simulation result of an input current waveform when a power factor correction circuit is operated.
{Fig. 5}
   Fig. 5 is a diagram illustrating an example of a hardware configuration of a zero-cross detection circuit illustrated in Fig. 1.
{Fig. 6}
   Fig. 6 is a diagram for illustrating a detection time detected by a detection unit.

### {Description of Embodiments}

An embodiment in applying a motor driving apparatus according to the present invention as an apparatus for driving a compressor motor in an air-conditioning apparatus will be described below with reference to the drawings.

Fig. 1 illustrates an example of a configuration of the motor driving apparatus according to the present embodiment. As illustrated in Fig. 1, a motor driving apparatus 1 includes a rectifying device 3 that converts an AC voltage from an AC power source 2 into a DC voltage, and an inverter device 4 that converts the DC voltage output from the rectifying device 3 into a three-phase AC voltage. The three-phase AC voltage output from the inverter device 4 is supplied to a compressor motor 5 in an air-conditioning apparatus.

The rectifying device 3 includes a power factor correction circuit 11, a full-wave rectification circuit 13, a smoothing capacitor 14, a control device 15, and a zero-cross detection circuit 16 as main components. In the present embodiment, the power factor correction circuit 11 is provided between the AC power source 2 and the full-wave rectification circuit 13. The power factor correction circuit 11 includes an inductor 11a and a switching element 11b corresponding to the inductor 11a. The power factor correction circuit 11 may be provided between the full-wave rectification circuit 13 and the smoothing capacitor 14. An installation position and a circuit configuration of the power factor correction circuit 11 are not limited to those in an example illustrated in Fig. 1. The power factor correction circuit 11 does not depend on its configuration and installation position if it achieves an effect of at least one of power factor correction and higher harmonic suppression.

The zero-cross detection circuit 16 is for detecting a zero-cross point of an input voltage input from the AC power source 2. The zero-cross detection circuit 16 also bears a part of a function as a detection unit 31 for detecting whether the AC power source 2 is stable, as described below. The zero-cross signal from the zero-cross detection circuit 16 is output to the control device 15.

An input current detection unit (not illustrated) is provided between the AC power source 2 and the full-wave rectification circuit 13. An input current signal, which has been detected by the input current detection unit, is output to the control device 15.

The control device 15 is an MPU (Micro Processing Unit), for example, and includes a computer readable recording medium on which a program for implementing a function of each of units, described below, is recorded. When a CPU (Central Processing Unit) reads out the program recorded on the recording medium into a main storage device such as a RAM (Random Access Memory) and executes the program, to implement processes, described below. Examples of the computer readable recording medium include a magnetic disk, a magneto-optical disk, and a semiconductor memory.

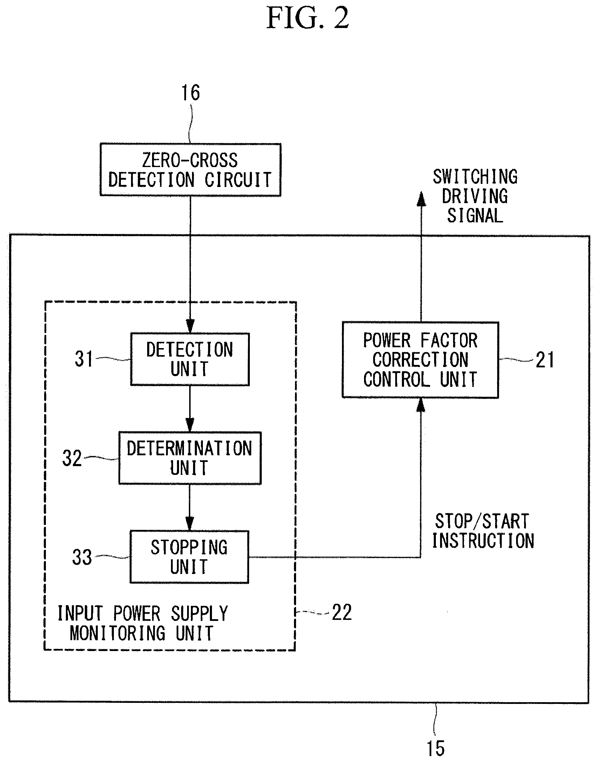

Fig. 2 is a functional block diagram of the control device 15. As illustrated in Fig. 2, the control device 15 includes a power factor correction control unit 21 and an input power supply monitoring unit 22 as main components.

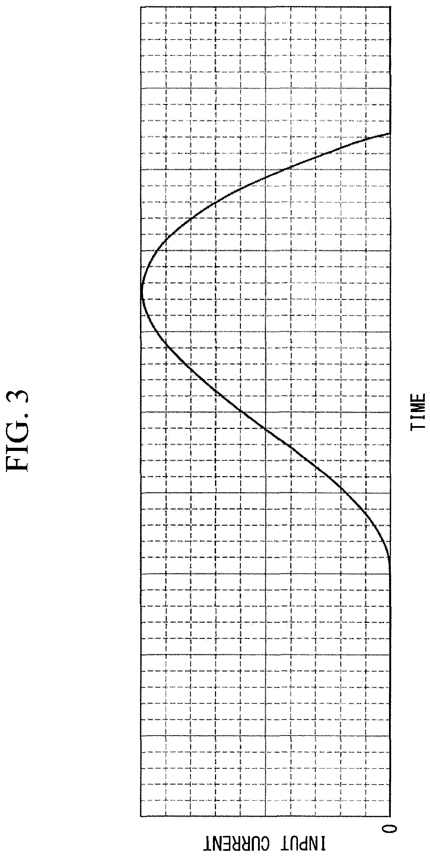

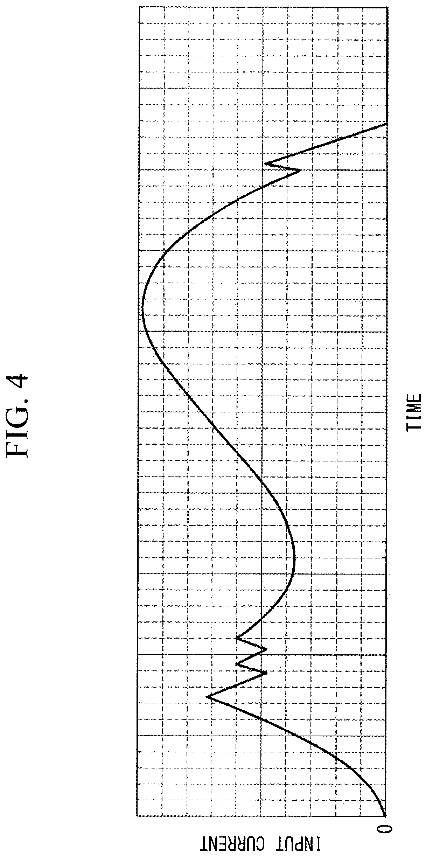

The power factor correction control unit 21 generates a switching driving signal for driving the switching element 11b to bring an input current waveform closer to a sine wave. For example, the power factor correction control unit 21 renders the switching element 11b conductive in the vicinity of the zero-cross point detected by the zero-cross detection circuit 16, to amplify a current. Fig. 3 illustrates a simulation result of the input current waveform when the power factor correction circuit 11 is not operated, and Fig. 4 illustrates a simulation result of the input current waveform when the power factor correction circuit 11 is operated. Fig. 4 illustrates an input current waveform when a predetermined number of pulses are applied in a half cycle with a zero-cross point of an input voltage used as a reference point, here, when the switching element 11b is rendered conductive four times as a specific example. In this example, the first to third pulses are applied from the zero-cross point to a phase angle of 90 degrees, and the fourth pulse is applied in the vicinity of a phase angle of 180 degrees. When the power factor correction circuit 11 is thus operated, a strain of an input current can be reduced.

When an input power supply voltage is unstable, for example, even if the power factor correction circuit 11 is operated, effects of power factor correction and higher harmonic suppression may not much be obtained. When control to apply the four pulses in a half cycle to render the switching element 11b conductive four times is performed, as illustrated in Fig. 4, for example, a conduction timing of the switching element 11b tends to shift if the input power supply voltage is unstable. When the switching element 11b is rendered conductive in the vicinity of a peak value (e.g., the phase angle of 90 degrees) of the input current, an overcurrent flows. Therefore, abnormal noise generation and element degradation (in a worse case, element damage and substrate damage) may occur. Therefore, in the present embodiment, the input power supply monitoring unit 22 (see Fig. 2) is provided so that such a situation does not occur, to monitor the input power supply voltage and operate the power factor correction circuit 11 in a period during which the input voltage is stable.

More specifically, the input power supply monitoring unit 22 includes a detection unit 31, a determination unit 32, and a stopping unit 33.

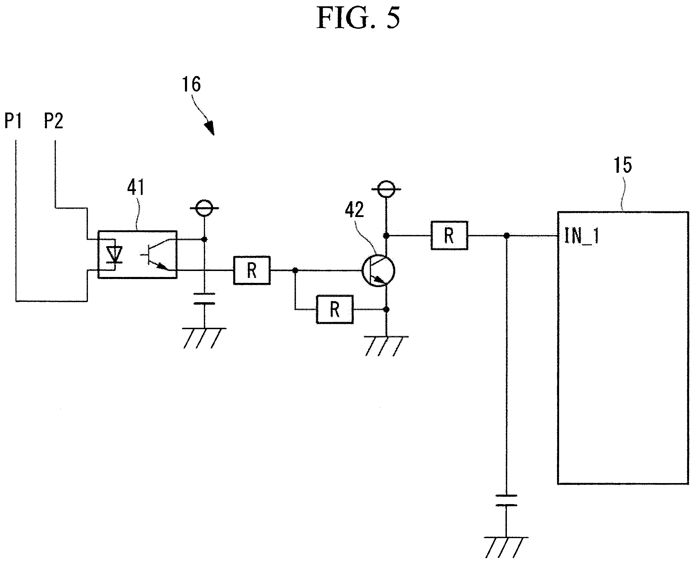

The detection unit 31 detects a period during which the input power supply voltage is not less than a previously set threshold value. The detection unit 31 causes the zero-cross detection circuit 16 to bear a part of its function, as described above. Fig. 5 illustrates an example of a hardware configuration of the zero-cross detection circuit 16. In Fig. 5, P1 and P2 respectively correspond to P1 and P2 illustrated in Fig. 1. As illustrated in Fig. 5, the zero-cross detection circuit 16 includes a photo coupler 41 that operates (i.e., outputs a high signal) when an absolute value of the input power supply voltage is not less than a predetermined value, and a transistor (a switching element) 42 that is rendered conductive while the output of the photo coupler 41 is high. A low signal is input to an input port IN_1 of the control device (MPU) 15 when the transistor 42 is rendered conductive, and a high signal is input to the input port IN_1 of the control device 15 when the transistor 42 is disconnected. The detection unit 31 measures a period during which the low signal is being continuously input to the input port IN_1 (a time measurement unit), and outputs its result to the determination unit 32.

The determination unit 32 determines whether a detection time detected by the detection unit 31 is within a previously set normal range. The normal range is set depending on a frequency of an input power supply, a characteristic of the photo coupler, and an allowable error (%).

The stopping unit 33 outputs an operation stop instruction to the power factor correction control unit 21 when the determination unit 32 determines that the detection time is out of the normal range. Thus, control of power factor correction by the power factor correction control unit 21 is stopped, and the switching element 11b is maintained in an off state.

An operation of the aforementioned motor driving apparatus 1 will be described below.

In the motor driving apparatus 1, an AC voltage supplied from the input power source 2 is converted into a DC voltage by the full-wave rectification circuit 13, and the DC voltage is supplied to the inverter 4. At this time, when the power factor correction control unit 22 in the control device 15 generates a switching driving signal based on a signal or the like detected by the zero-cross detection circuit 16, switching of the switching element 11b in the power factor correction circuit 11 is controlled. Thus, an input current close to a sine wave is supplied to the inverter device 4. The DC voltage from the rectifying device 3 is converted into a three-phase AC voltage in the inverter device 4, and the three-phase AC voltage is supplied to the motor compressor 5.

The detection unit 31 measures a detection time based on the signal from the zero-cross detection circuit 16. More specifically, a period during which a low signal is being continuously input to the input port IN_1 is measured. Thus, a period during which an input voltage, which is not less than a positive threshold value + α, is obtained is measured, as illustrated in Fig. 6, for example. While only the period during which the input voltage, which is not less than the positive threshold value + α, is obtained is measured in Fig. 6, a period during which an input voltage, which is not more than a negative threshold value - α, is obtained may be measured instead thereof or in addition thereto.

In Fig. 6, (a) is a diagram illustrating a case where the input voltage is normal, and (b) is a diagram illustrating a case where the input voltage is unstable. When the input voltage is unstable, as illustrated in Fig. 6 (b), a detection time (a hatched portion in the drawing) detected by the detection unit 31 becomes short. Therefore, the determination unit 32, described below, determines an abnormality.

The determination unit 32 determines whether a detection period (in other words, the length of the hatched portion in Fig. 6) detected by the detection unit 31 is within a predetermined normal range, and outputs a determination result to the stopping unit 33. The stopping unit 33 outputs an operation stop instruction to the power factor correction control unit 21 when the determination unit 32 determines that the detection period is out of the normal range. Thus, an operation of the power factor correction circuit 11 is stopped. As a result, when the input voltage greatly varies and is unstable, as illustrated in Fig. 6 (b), for example, power factor control by the power factor correction control unit 21 is stopped. Thus, an overcurrent caused by the switching element 11b being rendered conductive in the vicinity of a peak value of an input current can be prevented from being generated, and abnormal noise generation and element degradation can be prevented from occurring, for example.

After the power factor correction control is thus stopped, the operation of the motor driving apparatus 1 is continued while the operation of the power factor correction circuit 11 is stopped. When the motor driving apparatus 1 is restarted after the operation thereof is stopped, the input power supply monitoring unit 22 monitors the input voltage. When the detection time detected by the detection unit 31 is within the normal range, a resumption instruction is output to the power factor correction control unit 21 from the stopping unit 33. The power factor correction control unit 21 starts to control the power factor correction circuit 11 when the resumption instruction is input thereto.

Even after that, the input power supply monitoring unit 22 continuously monitors the input voltage. When the detection time departs from the normal range, the power factor correction control is stopped.

In the aforementioned example, when the input voltage becomes unstable, the power factor correction control has not been resumed until the motor driving apparatus 1 is restarted after being stopped once. However, instead of this, a detection time may be detected by the detection unit 31 after an elapse of a predetermined period of time since the power factor correction control was stopped, to resume the power factor correction control when the detection time is within the normal range.

As described above, the rectifying device 3 and the motor driving apparatus 1 according to the present embodiment enable the operation of the power factor correction circuit to be quickly stopped when the unstable power supply voltage is input thereto. This can achieve an effect of preventing an unintended behavior such as generation of an abnormal noise from occurring.

The present invention is not limited to only the aforementioned embodiment, and various modifications can be made within the scope of the present invention.

### {Reference Signs List}

- 1: Motor driving apparatus
- 2: AC power source
- 3: Rectifying device
- 4: Inverter device
- 5: Compressor motor
- 11: Power factor correction circuit
- 11a: Inductor
- 11b: Switching element
- 13: Full-wave rectification circuit
- 14: Smoothing capacitor
- 15: Control device
- 16: Zero-cross detection circuit
- 21: Power factor correction control unit
- 22: Input power supply monitoring unit
- 31: Detection unit
- 32: Determination unit
- 33: Stopping unit
- 41: Photo coupler
- 42: Transistor

## Claims

1. A rectifying device (3) comprising:
a power factor correction circuit (11) comprising an inductor (11a) and a first switching element (11b) provided to correspond to the inductor (11a),
a detection means (31) for detecting a period during which an input power supply voltage is not less than a previously set threshold value;
wherein the detection means (31) includes:
a photo coupler (41) configured to operate when an absolute value of the input power supply voltage is not less than the previously set threshold value,
a second switching element (42) configured to be rendered conductive while an output of the photo coupler is high,
an input unit configured so that a low signal is input while the second switching element (42) is rendered conductive and to which a high signal is input while the second switching element (42) is disconnected, and
a time measurement unit (IN_1) configured to measure a period during which the low signal is being continuously input in the input unit,
a determination means (32) for determining an abnormality in accordance with whether a detection time detected by the detection means (31) is shorter than a previously set normal range, wherein said normal range is set depending on a frequency of an input power supply, a characteristic of the photocoupler, and an allowable error; and
a stopping means (33) for stopping an operation of the power factor correction circuit (11) when the detection time is out of the normal range.

2. The rectifying device (3) according to claim 1, wherein the photo coupler (41) and the second switching element (42) in the detection means (31) are used together with a zero-cross detection circuit (16) configured to detect a zero-cross point.

3. A motor driving apparatus comprising the rectifying device (3) according to any one of claims 1 or 2.

4. The motor driving apparatus according to claim 3, wherein, when the motor driving apparatus stops operating after the stopping means stops the operation of the power factor correction circuit (11) and when an instruction to start the motor driving apparatus is input thereto, it is determined whether the detection time detected by the detection means (IN_1) is within the normal range, to resume the operation of the power factor correction circuit (11) when the detection time is within the normal range.

5. The motor driving apparatus according to claim 3, wherein, when the stopping means (33) stops the operation of the power factor correction circuit (11), the determination means (32) determines whether the detection time detected by the detection means (IN_1) is within the normal range after a predetermined period of time has elapsed since the operation was stopped, to resume the operation of the power factor correction circuit (11) when the detection time is within the normal range.

6. An air-conditioning apparatus comprising the motor driving apparatus according to any one of claims 3 to 5.

7. A method for controlling a rectifying device (3) comprising a power factor correction circuit (11) comprising an inductor (11a) and a first switching element (11b) provided to correspond to the inductor (11), the method comprising the step of:
detecting a period during which an absolute value of an input power supply voltage is not less than a previously set threshold value;
wherein the detecting step includes
operating a photo coupler (41) when an absolute value of the input power supply voltage is not less than the previously set threshold value,
rendering a second switching element (42) conductive while an output of the photo coupler (41) is high,
inputting a low signal while the second switching element (42) is rendered conductive and a high signal while the second switching element (42) is disconnected, and
measuring a period during which the low signal is being continuously input,
the method further comprising the steps of :
determining an abnormality in accordance with whether a detected detection time is shorter than a previously set normal range, wherein said normal range is set depending on a frequency of an input power supply, a characteristic of the photocoupler, and an allowable error; and
stopping an operation of the power factor correction circuit when the detection time is out of the normal range.

## Patentansprüche

1. Gleichrichtungsvorrichtung (3) mit:
einer Leistungsfaktorkorrekturschaltung (11) mit einer Induktivität (11a) und einem ersten Schaltelement (11b), das entsprechend der Induktivität (11a) vorgesehen ist;
einem Erfassungsmittel (31) zum Erfassen einer Zeitspanne, während der eine Eingabeleistungszufuhrspannung nicht kleiner als ein voreingestellter Schwellwert ist;
wobei das Erfassungsmittel (31) enthält:
einen Photokoppler (41), der ausgestaltet ist, um zu arbeiten, wenn ein Absolutwert der Eingabezufuhrspannung nicht kleiner als der vorher eingestellte Schwellwert ist,
ein zweites Schaltelement (42), das ausgestaltet ist, um leitfähig gemacht zu werden, während eine Ausgabe des Photokopplers hoch ist;
eine Eingabeeinheit, die ausgestaltet ist, so dass ein niedriges Signal eingegeben wird, während das zweite Schaltelement (42) leitfähig gemacht ist, und an die ein hohes Signal eingegeben wird, während das zweite Schaltelement (42) getrennt ist, und
eine Zeitmesseinheit (IN_1), die ausgestaltet ist, um eine Zeitspanne zu messen, während der das niedrige Signal kontinuierlich in die Eingabeeinheit eingegeben wird,
ein Bestimmungsmittel (32) zum Bestimmen einer Anomalität in Übereinstimmung damit, ob eine Erfassungszeit, die durch das Erfassungsmittel (31) erfasst wurde, kürzer als ein voreingestellter Normalbereich ist, wobei der Normalbereich in Abhängigkeit von einer Frequenz einer Eingabeleistungszufuhr, einer Charakteristik des Photokopplers und eines zulässigen Fehlers eingestellt wird; und
ein Stoppmittel (33) zum Stoppen eines Betriebs der Leistungsfaktorkorrekturschaltung (11), wenn die Erfassungszeit außerhalb des normalen Bereichs ist.

2. Gleichrichtungsvorrichtung (3) nach Anspruch 1, bei der der Photokoppler (41) und das zweite Schaltelement (42) in dem Erfassungsmittel (31) zusammen mit einer Nulldurchgangsdetektionsschaltung (16) verwendet werden, die ausgestaltet ist, um einen Nulldurchgangspunkt zu erfassen.

3. Motortreibergerät mit der Gleichrichtungsvorrichtung (3) nach einem der Ansprüche 1 oder 2.

4. Motortreibergerät nach Anspruch 3, bei dem, wenn das Motortreibergerät den Betrieb stoppt, nachdem das Stoppmittel den Betrieb der Leistungsfaktorkorrekturschaltung (11) stoppt, und wenn ein Befehl zum Start des Motortreibergeräts eingegeben wird, bestimmt wird, ob die Erfassungszeit, die von dem Erfassungsmittel (IN_1) erfasst wurde, innerhalb des normalen Bereichs ist, um den Betreib der Leistungsfaktorkorrekturschaltung (11) wiederaufzunehmen, wenn die erfasste Zeit innerhalb des normalen Bereichs ist.

5. Motortreibergerät nach Anspruch 3, bei dem, wenn das Stoppmittel (33) den Betrieb der Leistungsfaktorkorrekturschaltung (11) stoppt, das Bestimmungsmittel (32) bestimmt, ob die erfasste Zeit, die durch das Erfassungsmittel (IN_1) erfasst wurde, innerhalb des normalen Bereichs ist, nachdem eine vorgegebene Zeitspanne abgelaufen ist, seitdem der Betrieb angehalten wurde, um den Betrieb der Leistungsfaktorkorrekturschaltung (11) wiederaufzunehmen, wenn die erfasste Zeit innerhalb des normalen Bereichs ist.

6. Klimaanlagegerät mit dem Motortreibergerät nach einem der Ansprüche 3 bis 5.

7. Verfahren zum Steuern einer Gleichrichtungsvorrichtung (3) mit einer Leistungsfaktorkorrekturschaltung (11) mit einer Induktivität (11a) und einem ersten Schaltelement (11b), das vorgesehen ist, um die Induktivität (11a) zu entsprechen, wobei das Verfahren die Schritte umfasst:
Erfassen einer Zeitspanne, während der ein Absolutwert einer Eingabeleistungszufuhrspannung nicht kleiner als ein voreingestellter Schwellwert ist;
wobei der Erfassungsschritt enthält:
Betreiben eines Photokopplers (41), wenn ein Absolutwert der Eingabeleistungszufuhrspannung nicht kleiner als der voreingestellte Schwellwert ist,
Leitfähig-Machen eines zweiten Schaltelements (42), während einer Ausgabe des Photkopplers (41) hoch ist,
Eingeben eines niedrigen Signals, während das zweite Schaltelement (42) leitfähig ist, und eines hohen Signals, während das zweite Schaltelement (42) getrennt ist, und
Messen einer Zeitspanne während der das niedrige Signal kontinuierlich eingegeben wird,
wobei das Verfahren des Weiteren die Schritte umfasst:
Bestimmen einer Anomalität in Übereinstimmung mit dem, ob eine erfasste Erfassungszeit kürzer als ein voreingestellter Normalbereich ist, wobei der Normalbereich in Abhängigkeit von einer Frequenz in der Eingabeleistungszufuhr, einer Charakteristik des Photokopplers und eines erlaubten Fehlers eingestellt wird; und
Stoppen eines Betriebs der Leistungsfaktorkorrekturschaltung (11), wenn die erfasste Zeit außerhalb des normalen Bereichs ist.

## Revendications

1. Dispositif de redressement (3) comprenant :
un circuit de correction de facteur de puissance (11) qui comprend un inducteur (11a) et un premier élément de commutation (11b) prévu afin de correspondre à l'inducteur (11a),
un moyen de détection (31) pour détecter une période pendant laquelle une tension d'alimentation d'entrée est non inférieure à une valeur de seuil préalablement définie ;
dans lequel le moyen de détection (31) comprend :
un photocoupleur (41) configuré pour fonctionner lorsqu'une valeur absolue de la tension d'alimentation d'entrée est non inférieure à la valeur de seuil préalablement définie,
un second élément de commutation (42) configuré pour être rendu conducteur pendant qu'une sortie du photocoupleur est élevée,
une unité d'entrée configurée de sorte qu'un signal faible soit fourni pendant que le second élément de commutation (42) est rendu conducteur, et à laquelle un signal élevé est fourni pendant que le second élément de commutation (42) est déconnecté, et
une unité de mesure du temps (IN_1) configurée pour mesurer une période pendant laquelle le signal faible est fourni en continu à l'unité d'entrée,
un moyen de détermination (32) pour déterminer une anomalie selon le fait qu'une durée de détection détectée par le moyen de détection (31) soit plus courte qu'une plage normale préalablement définie, ladite plage normale étant définie selon une fréquence d'une alimentation d'entrée, une caractéristique du photocoupleur, et une erreur autorisée ; et
un moyen d'arrêt (33) pour arrêter le fonctionnement du circuit de correction de facteur de puissance (11) lorsque la durée de détection se trouve en dehors de la plage normale.

2. Dispositif de redressement (3) selon la revendication 1, dans lequel le photocoupleur (41) et le second élément de commutation (42) dans le moyen de détection (31) sont utilisés avec un circuit de détection de dépassement du zéro (16) configuré pour détecter un point de dépassement du zéro.

3. Appareil d'entraînement de moteur qui comprend le dispositif de redressement (3) selon l'une quelconque des revendications 1 ou 2.

4. Appareil d'entraînement de moteur selon la revendication 3, dans lequel, lorsque l'appareil d'entraînement de moteur arrête de fonctionner après que le moyen d'arrêt a arrêté le fonctionnement du circuit de correction de facteur de puissance (11) et lorsqu'une instruction de démarrage de l'appareil d'entraînement de moteur lui est délivrée, il est déterminé si la durée de détection détectée par le moyen de détection (IN_1) se trouve ou non sur la plage normale, afin de reprendre le fonctionnement du circuit de correction de facteur de puissance (11) lorsque la durée de détection se trouve sur la plage normale.

5. Appareil d'entraînement de moteur selon la revendication 3, dans lequel, lorsque le moyen d'arrêt (33) arrête le fonctionnement du circuit de correction de facteur de puissance (11), le moyen de détermination (32) détermine si la durée de détection détectée par le moyen de détection (IN_1) se trouve ou non sur la plage normale après qu'une période de temps prédéterminée s'est écoulée depuis que le fonctionnement a été arrêté, afin de reprendre le fonctionnement du circuit de correction de facteur de puissance (11) lorsque la durée de détection se trouve sur la plage normale.

6. Appareil de climatisation comprenant l'appareil d'entraînement de moteur selon l'une quelconque des revendications 3 à 5.

7. Procédé de commande d'un dispositif de redressement (3) comprenant un circuit de correction de facteur de puissance (11) qui comprend un inducteur (11a) et un premier élément de commutation (11b) prévu pour correspondre à l'inducteur (11), le procédé comprenant l'étape de :
détection d'une période pendant laquelle une valeur absolue d'une tension d'alimentation d'entrée n'est pas inférieure à une valeur de seuil préalablement définie ;
l'étape de détection comprenant
le fonctionnement d'un photocoupleur (41) lorsqu'une valeur absolue de la tension d'alimentation d'entrée est non inférieure à la valeur de seuil préalablement définie,
le fait de rendre un second élément de commutation (42) conducteur pendant qu'une sortie du photocoupleur (41) est élevée,
la fourniture d'un signal faible pendant que le second élément de commutation (42) est rendu conducteur et d'un signal élevé pendant que le second élément de commutation (42) est déconnecté, et
la mesure d'une période pendant laquelle le signal faible est fourni en continu,
le procédé comprenant en outre les étapes consistant à :
déterminer une anomalie selon le fait qu'une durée de détection détectée soit plus courte qu'une plage normale définie au préalable,
ladite plage normale étant définie selon une fréquence d'une alimentation d'entrée, une caractéristique du photocoupleur, et une erreur autorisée ; et
arrêter le fonctionnement du circuit de correction de facteur de puissance lorsque la durée de détection se trouve en dehors de la plage normale.
